# EUROPEAN PATENT SPECIFICATION

(11) **EP 2 108 809 B1**
(45) Date of publication and mention of the grant of the patent: **25.02.2015**
(21) Application number: 09156507.7
(22) Date of filing: 27.03.2009
(51) Int. Cl.: F02M 31/125, F02M 53/02, F02M 55/02

(54) **Heating device for fuel feeding ducts, fuel feeding duct and combustion engine.**
Heizvorrichtung für Brennstoffzuführkanäle, Brennstoffzuführkanäle und Verbrennungsmotor
Dispositif thermique pour conduits d'alimentation en carburant, conduit d'alimentation en carburant et moteur à combustion

(30) Priority: 08.04.2008 IT TO20080271
(43) Date of publication of application: 14.10.2009
(73) Proprietor: Eltek S.p.A., 15033 Casale Monferrato (AL) (IT)
(72) Inventor: Colombo, Paolo, I-15100 Alessandria (IT)
(74) Representative: Dini, Roberto

(56) References cited:
- EP-A1- 1 101 519
- EP-A1- 1 702 662
- DE-A1- 10 341 708
- FR-A1- 2 876 161
- US-A- 4 793 317

## Description

The present invention relates to a heating device for fuel feeding ducts, a fuel feeding duct, and a combustion engine.

As known, in internal combustion engines a mixture of fuel and combustive agent reacts within a combustion chamber (comprised between a cylinder and a piston), so as to produce mechanical work starting from the chemical combustion reaction. The term "fuel" refers to the chemical substance or mixture that becomes oxidized, whereas the term "combustive agent" refers to the chemical substance or mixture that is reduced during the chemical combustion reaction. In general, the actual fuel is never entirely pure, and often contains additives (which may participate in the combustion reaction only partially or not at all), and the actual combustive agent is typically air (i.e. a mixture of several gases, of which only one, i.e. oxygen, participates in the combustion reaction); for the purposes of the present invention, however, the term "fuel" will simply refer to that liquid or fluid, e.g. petrol, diesel oil, alcohol or fuel oil, which is mixed with the combustive agent in order to bring about the combustion reaction, whether it includes or not any additives or a portion of said combustive agent.

Aiming at improving the combustion (as regards the quantity of fuel actually used and the homogeneity of the reaction occurring in the combustion chamber) and minimize harmful exhaust emissions, as well as in an attempt to maximize efficiency, a known solution provides for heating the fuel before it enters the combustion chamber(s).

This measure is also useful for dealing with the following two problems:
- optimizing the combustion in every operating condition of the engine,
- facilitating cold starting.

These problems are especially felt when the fuel is diesel oil, like in diesel engines, or a biofuel or an alcohol, such as ethanol, obtained for example from fermentation of vegetable products (a country where this type of fuel is widespread is Brazil), or a fuel oil.

It should also be taken into account that there are engines designed for using more than one fuel type, in particular two different fuel types (e.g. petrol and alcohol): in these engines, the two fuels can be used alternately, and therefore a situation may arise where one fuel needs to be heated while the other one does not or does to a lesser extent, or they can be used as a mixture according to a predefined and/or variable ratio of said two different fuels; the mixing process may take place automatically, with ratios or percentages determined by an electronic control unit of the vehicle.

In the engine industry, a currently widespread technology is the so-called "common rail" or "fuel rail", which in substance is an injection system wherein the fuel is delivered at a very high pressure through a single feeding duct that feeds a plurality of cylinders (hence the definitions "common rail" and "fuel rail"); between the "common rail" or "fuel rail" and the cylinders' combustion chambers there are the injectors, which may be connected to the feeding duct either directly or through very short ducts, which essentially branch off from the feeding duct itself; in general, there is a single feeding duct for the whole engine. For engines equipped with a "common rail" or "fuel rail", i.e. a feeding duct, different solutions have been developed for heating the fuel before delivering it into the combustion chamber: according to a first type of solution, the fuel is heated in the pump that delivers it to the feeding duct (as described, for example, in patent DE19918227); according to a second type, the fuel is heated by a plurality of heaters installed at the single injectors that feed the cylinders (as described, for example, in patents WO2006/130938 and DE10340159); according to a third type, the fuel is heated by means of a heated adapter placed between the feeding duct and the injectors (as described, for example, in patent WO2007/028663).

According to a fourth type of solution, the fuel is heated as it flows through the feeding duct, as described for example in patent publication USH1820 and in patents DE10341708, FR 2876161 and JP83338339; the present invention belongs to this type of solution.

Although these solutions can improve the combustion process, they nonetheless suffer from a number of drawbacks.

For example, the solution adopted in patent publication USH1820 teaches to heat the fuel in the feeding duct through a heater consisting of an electric resistor housed in a casing inside the feeding duct that keeps it separate from the fuel, which casing is heated by the resistor and in turn transfers heat to the fuel flowing in the feeding duct.

A first problem suffered by this solution is that the electric resistor, and especially the casing thereof (which is required in order to insulate the resistor electrically from the fuel), take up a certain non-negligible volume inside the feeding duct, which must therefore be oversized in order to take into account the non-usable volume occupied by the casing.

Still with reference to the teaching of document USH1820, the heater has a constant rate, with the outer casing providing a uniform thermal exchange which however does not necessarily translate into uniform fuel heating, as will be explained below.

The temperature of the fuel at the fuel inlet end of the feeding duct is, in fact, lower than the temperature of the fuel at the opposite end; more in particular, the temperature of the fuel that arrives at the injectors is different among the various injectors (depending on the positions of the injectors with respect to the fuel inlet end of the duct), and this involves non-homogeneous combustion reactions to a certain degree among the various cylinders, leading to an undesired efficiency reduction and/or an imperfect combustion of the fuel, a portion of which may even be exhausted unburnt, and/or hard starting; it is apparent that the fuel, which is in contact with the casing, tends to warm up to an extent which is proportional to the time it remains in contact with the heater, i.e. to the time of permanence within the duct, which varies according to the distance between the inlet and outlet points of the duct itself.

One type of heater according to the prior art consists of a glow plug, i.e. an electric winding inserted in a casing (typically made of metal) which is heated by Joule effect and exchanges heat with the fuel. According to the prior art, this type of heater requires that a thermally conductive material be interposed between the electric winding and the casing, which material must be of a type suitable for reducing the thermal resistance between the two parts, i.e. for promoting the thermal exchange.

Although quite inexpensive, this solution is not the best one, since there may be delays and/or losses in the propagation of heat from the electric winding to the fuel.

The present invention aims at overcoming these and other drawbacks of the prior art through a heating device for fuel feeding ducts according to the appended claims, which are intended as an integral part of the present description.

More specifically, a preferred version of the present invention relates to a heating device provided as a single heating element adapted to be installed inside a feeding duct, the advantages of which will be explained in the following description.

The present invention is based on the idea of fitting at least one heating device comprising at least one body and at least one electric heating element associated therewith, said device being provided as a component which is at least partly mounted or integrated into the feeding duct in a manner such that it extends across the entire length of the feeding duct or a portion thereof; the electric heating element is at least partly manufactured by using deposition and/or lithography and/or serigraphy techniques.

As will be explained below, the use of such a heating device offers a number of advantages.

In general, the term "deposition techniques" refers to serigraphic, lithographic, electrochemical, "spin coating" or painting techniques and the like that allow to create tracks made of an electrically conductive material, which are typically very thin (e.g. one millimeter), on a deposition medium or substrate.

A particular deposition technique is the so-called "thick-film" technique, which is per se known and commonly used in the electronics fields of printed circuits and hybrid circuits (i.e. those circuits in which active elements and inductors are provided in discrete form, whereas connections, resistors and sometimes also capacitors are built in the deposition substrate); in accordance with this technique, the tracks made of electrically conductive and/or resistive material have typically a thickness of a few tens of µm.

A heater thus manufactured offers the possibility of including one or more electric heating elements consisting of the tracks made of electrically conductive material deposited according to any desired pattern on the heater body (i.e. the deposition substrate).

The use of a heater according to these techniques and to the teachings of the present invention, which can be inserted into a feeding duct for heating the fuel flowing therein, typically requires that the electric heating and/or electrically conductive elements are provided on the surface of the heater body and consist of tracks which may possibly be coated with a protective layer, preferably of a thermally conductive type, in order to prevent etching by the chemical agents contained in the fuel; the heater body, as will be explained hereafter, may consist of a metal piece coated with an electrically insulating material that prevents the tracks from getting shorted. The electrically insulating material is preferably of a thermally conductive type and is very thin; it may even be provided in the form of a layer of oxide of the metal material of the substrate.

The heater body may advantageously be of a different type; for example, it may be made of an electrically insulating material, preferably thermally conductive, e.g. ceramic material.

A heater thus manufactured offers several advantages: firstly, it solves the problems presented by the heaters known in the art, since the heater may have different shapes and so may the heating element, thus providing the utmost design and installation flexibility, besides allowing to create zones having different thermal power on one heating device, which advantageously leads to achieve a uniform temperature of the fuel in the injection ducts and/or feeding duct.

In fact, the heating elements typically consist of tracks, which are extremely thin and take up a very small volume inside the feeding duct, which volume is definitely smaller than that occupied by a traditional electric winding.

Furthermore, the insulation of the electric heating element, which in the prior art consisted of the casing that enveloped the resistor, can now be either wholly omitted (if the tracks are made of materials which are not subject to etching by the chemical agents contained in the fuel) or replaced with a thin protective layer (e.g. a paint, in particular a glassy paint), so that very small overall dimensions can be obtained, as well as an improved thermal exchange and/or less thermal resistance between the heater and the fuel.

Also, since the substrate may have any shape, the fuel flow in the feeding duct is not hindered at all, as will be explained later on, thus allowing to use smaller fuel rails.

In accordance with the teachings of the present invention, the heating elements are provided on the heater body made of, without being limited to, a metal like steel, onto which an electrically insulating material is present (or is deposited), which material is preferably thermally conductive and very thin, and may possibly even consist of a layer of oxide of the metal material of the substrate.

Stainless steel makes the heating device suitable for use in the presence of fuel and/or corrosive agents often found in fuels such as ethanol, biodiesel and the like; the metal material may however be of any other type fit for the application, e.g. a ceramic substrate or more in particular a titanium-based ceramic substrate (e.g. like titanium carbide or titanium boride) or a suitable titanium alloy, or even an aluminium substrate coated with a layer of aluminium oxide.

As aforementioned, the heater body may also be made of a different material, not necessarily a metallic one, such as a ceramic material, preferably of a type having good thermal conductivity and high electric resistance or insulation; alternatively, it may even be made of plastic material.

The presence of heating elements in the form of tracks more or less profiled and/or close to one another implies that in a certain area there can be more or less thermal exchange with the fuel that comes in contact with the heating device, which then allows to obtain the above-mentioned advantages of a variable, progressive and/or localized heating; by using these techniques it is in fact very easy to distribute one or a plurality of tracks onto the surface of a body, which tracks may be arranged at will and may have any shape and/or density and/or cross-section, i.e. a shape and/or position that allow to achieve the desired distribution of the heater resistance and/or characteristics.

In other words, it is in substance possible to provide a variable heating of or a variable thermal exchange with the fuel flowing in said feeding duct; more in particular, it is possible to maximize the thermal exchange at the inlets or the outlets of the feeding duct.

For example, it is conceivable to provide a body, e.g. a steel pipe, on which the heating elements, i.e. the tracks, are arranged, wherein at the fuel inlet of the feeding duct the tracks are closer to one another, so that the fuel is heated to a medium temperature, are then spaced farther along the path between an injector and the next one, thus keeping the temperature substantially constant, and are again arranged closer to one another near each injector, or branching duct, so as to heat properly that portion of the fuel that enters the branching duct or the injector itself.

The fuel flowing in the feeding duct can be heated in a progressively variable manner, e.g. by means of resistors or heating tracks concentrated near the injectors in a scalar manner (i.e. with more or less dense tracks), so arranged that the zone immediately before each branching duct or injector provides a higher heat output than the zone immediately after it.

For example, the thermal exchange provided by the heating device according to the present invention is localized (meaning that the highest thermal exchange occurs in well-defined preferred spots or zones) and/or progressively variable between the fuel inlet and the fuel outlet of the feeding duct. This allows the fuel that comes in contact with the heater to reach the injector which is farther from the inlet at a temperature which is substantially equal or close to the temperature at which the fuel reaches the injector which is closer to the duct inlet, or at predefined and/or optimal temperatures for each injector.

According to a variant of the invention, near the injectors or branching ducts the heater exchanges more heat with the fuel, so that the heating achieved is not only variable (or progressively variable), but also localized.

To this end, the heater may include tracks or resistors that, across the extension of the body, have a variable shape or density per surface unit; in particular, they provide maximum density or resistance at the inlets and/or at the outlets of said feeding duct.

This feature of the heating device is extremely advantageous because it ensures optimal fuel heating without using more energy.

Furthermore, the fuel can be heated evenly regardless of the different length to be run between the inlet and the outlet, i.e. independently of the velocity at which the fuel (or fluid) flows from the inlet to the outlet of the feeding duct; said distance and/or velocity, and therefore the heating effect, can in fact vary between an outlet duct closer to the inlet duct and an outlet duct farther from the inlet duct.

As aforementioned, according to a further variant the fuel can be heated differently near each outlet, and uniform heating can be obtained at each outlet, taking also into account the fact that the fuel has already been partially heated by the upstream heater portion.

The quantity of heat transferred to the fuel (and consequently the temperature of the fuel itself) can be established on the basis of experimental data (e.g. stored in an electronic control unit) or on the basis of readings taken by temperature sensors located near each outlet duct for each injector: by so doing it is possible, for example, to provide a different heat output in each zone of the heating element associated with each outlet (e.g. the quantity of heat generated may decrease as the fuel flows on through the feeding duct).

Additionally, according to a particularly advantageous aspect, the body of the heating device has a rod-like or cylindrical or tubular shape, and the heating elements are arranged on its surface in a manner such as to optimize the fluidodynamic characteristics of the feeding duct, thereby avoiding any load losses.

If the body of the heating device is a hollow tubular body, it is possible to provide across the extension thereof a series of holes that put the inner volume of the tubular body in communication with the outside, thereby allowing to increase the section through which the fluid can flow in the feeding duct and/or to enlarge the thermal exchange area, since the fluid will be in contact with both the outer wall and the inner wall of the tubular body or support, said walls being preferably made of a thermally conductive material, such as a metal; the exploitation of the whole inner volume of the feeding duct allows to create feeding ducts which are smaller than those fitted with winding-type heating devices according to the prior art: the latter, in fact, include a coil shell that takes up a certain duct volume, which is therefore unused by the fuel flow.

In addition to providing important advantages in terms of thermal exchange between the heater and the fuel (due to the larger area of mutual contact), this variant also offers further advantages in terms of size (and hence of weight and cost) of the feeding duct, in particular because also the inner portion of the cylindrical heater is used as a fluid passage.

Since the heating device according to the present invention is an electric one, it is conceivable that it also performs or incorporates a connector function, so that power can be supplied to the heating device through construction details which will be clarified later on, thus facilitating the installation of the heating device into the feeding duct.

In addition, this particular construction allows the heating device according to the present invention to be installed into both a specially manufactured feeding duct and, as an accessory part, into an existing one, which will thus gain more flexibility of use: let us consider, for example, a feeding duct originally conceived for a petrol engine (which does not require any fuel heating function); should one want to feed the engine with ethanol, it would be necessary to provide the fuel heating function by replacing the feeding duct with another one equipped with heaters; instead, by using a heating device according to the present invention it will be possible, at a relatively low cost and with a certain ease of installation, to use one type of feeding duct for both versions with and without heater.

According to an alternative embodiment, the body of the heating device is not tubular, but prismatic or profiled or flat (e.g. a plate, which is a flat body because it extends substantially in two orthogonal main directions and has a limited thickness): in this latter case, making the tracks will be even simpler and cheaper, in that it will be sufficient to use the equipment commonly used for the production of printed circuits.

The features of the invention are set out specifically in the appended claims; said features and the advantages obtained therefrom will become more apparent from the following description, provided by way of non-limiting example with reference to the annexed drawings, wherein:
Fig.1 is a perspective view of the heating device according to a first version of the present invention;
Fig.2 is a perspective view of a feeding duct according to a first version of the present invention;
Fig.3 is a perspective view of the feeding duct of Fig.2 with the heating device of Fig.1 fitted into it;
Fig.4 is a vertical section or partially sectional view of Fig.3;
Fig.5 shows the heating device of Fig.1 from a different viewpoint, which highlights the holes provided in the device;
Fig.6 shows the heating device of Fig.1 from a different viewpoint, which highlights the electric heating element;
Fig.7 is a vertical section or partially sectional view of the device of Fig.1;
Fig.8 is a first enlarged partial view of the device of Fig. 4;
Fig.9 is a second enlarged partial view of the device of Fig. 4;
Fig.10 is an enlarged partial view of the device of Fig.7;
Fig.11 is a perspective view of the heating device according to a second version of the present invention;
Fig.12 shows a variant comprising two heating devices inserted into the opposite ends of a feeding duct;
Fig.13 shows a detail of Fig.12;
Fig. 14 schematically shows a variant of a portion of the device of Fig.1, i.e. with a heater having a prismatic body;
Fig. 15 schematically shows a further variant of a portion of the device of Fig.1, i.e. with a heater having a flat body (in particular a plate);
Figs. 16 to 21 show several views of an alternative embodiment of the connection terminal;
Figs. 22 to 24 show a further embodiment of the connection terminals;
Fig. 25 shows a variant wherein the device has a coil-shaped continuous heating track;
Fig. 26 shows a connection terminal and a device having a coil-shaped continuous heating track;
Fig. 27 shows a detail of Fig. 26;
Fig. 28 shows a detail of the connection terminal of Fig. 20;
Fig. 29 shows in greater detail the contact end of the connection terminal of Fig. 22.

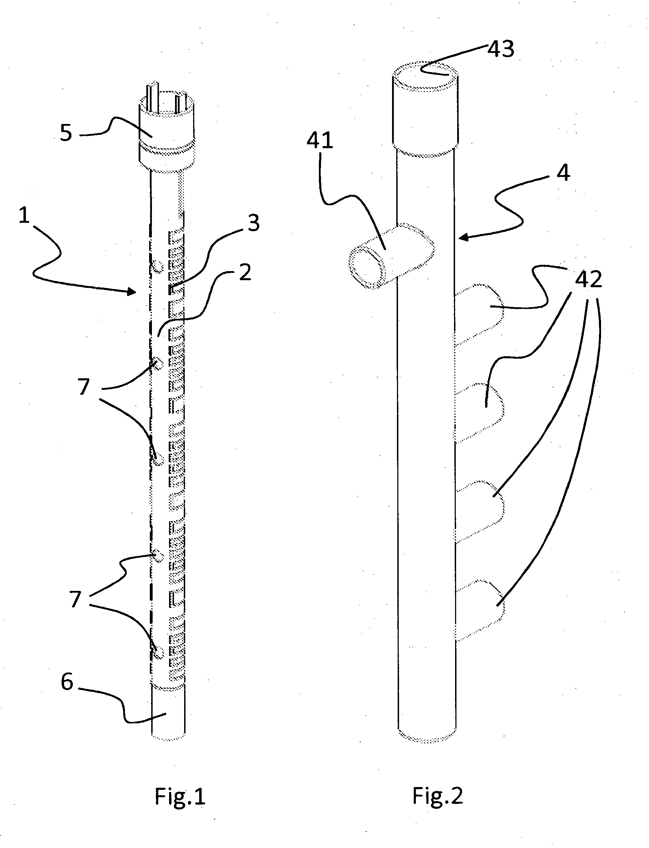

Referring now to Fig. 1, there is shown a first embodiment of a heating device 1 for fuel feeding ducts according to the present invention, which comprises a body 2 with which an electric heating element 3 is associated.

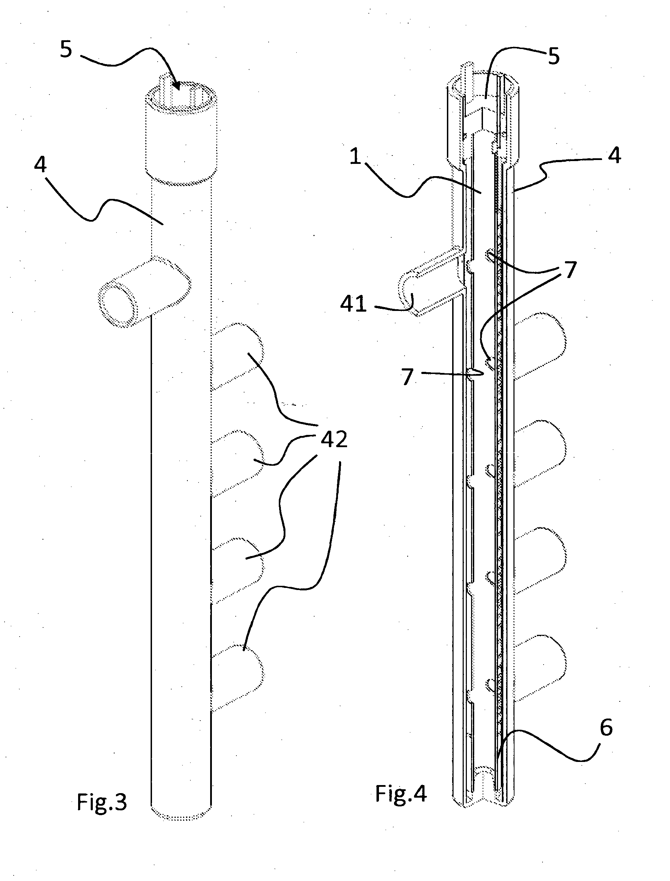

Heating device 1 is adapted to be at least partly installed or integrated into said feeding duct 4, which is shown in Fig. 2 in a generic embodiment, and which comprises one fuel inlet 41 and four outlets 42 that are or can be associated with as many injectors (or branching ducts, depending on the type of duct); in the embodiment shown, feeding duct 4 (or "common rail" or "fuel rail") has a tubular shape that is open at one end 43 into which, as shown in Figs. 3 and 4, heating device 1 is inserted; thus, the latter also performs the function of closing end 43 of feeding duct 4.

For this purpose, heating device 1 is provided at one end with an end portion 5 which will be described in detail hereafter.

In the first embodiment shown in Figs. 1, 2, 3 and 4, heating device 1 carries or comprises, at the end opposite to the one having end portion 5, a centring element 6, which will also be described in greater detail later on.

It can be seen in Figs. 1 and 4 that heating device 1 extends within feeding duct 4; in particular, in the embodiment shown it extends for the whole length of the duct itself; it is however conceivable that heating device 1 only extends for a portion of feeding duct 4 without any detriment to the operation thereof.

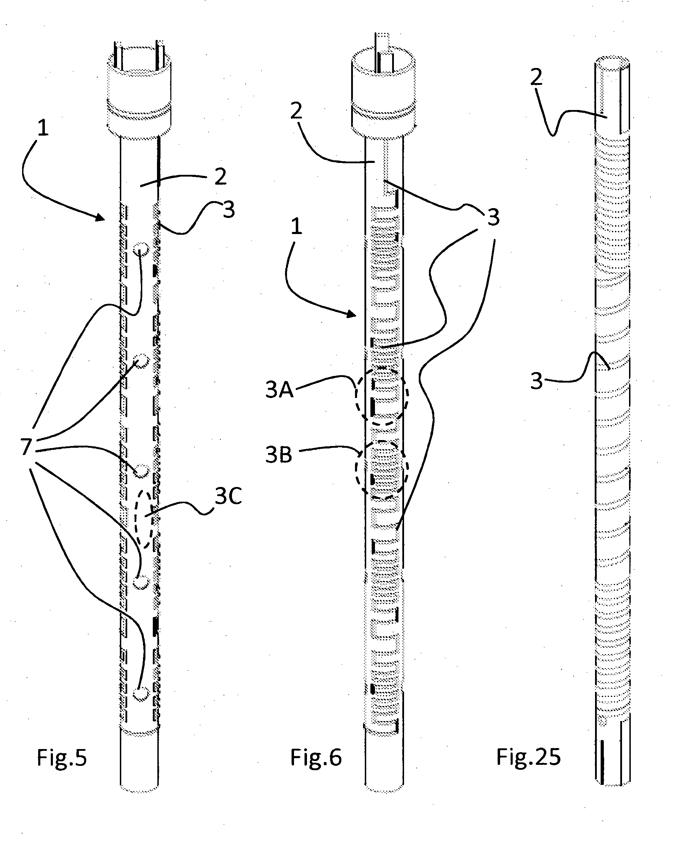

As shown in Fig. 1 and Fig. 6, heating device 1 comprises a body 2 with which at least one electric heating element 3 is associated, said element being obtained at least partly on body 2 through deposition and/or lithography and/or serigraphy techniques.

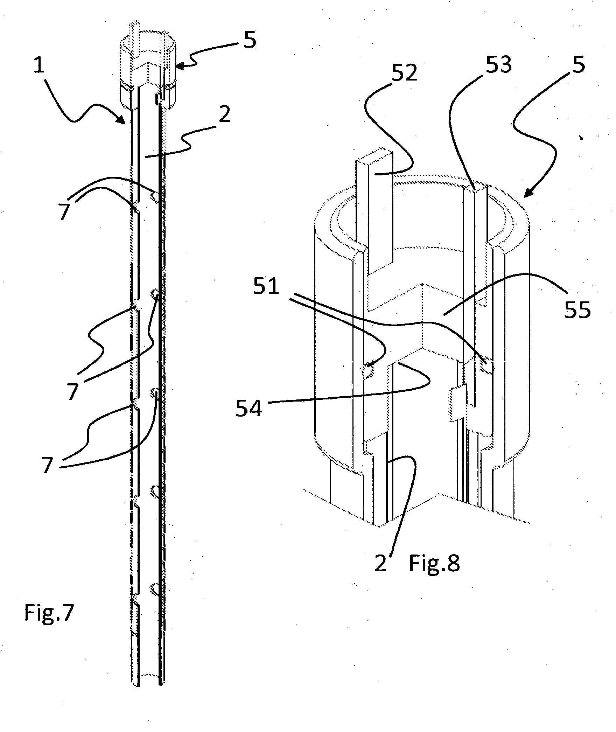

More in detail, body 2 is shown in Fig. 7 as a hollow tubular body having a number of holes 7 which put the inner volume of the tubular body in communication with the annular chamber created between the outer surface of body 2 and the inner surface of feeding duct 4; this solution advantageously allows to use almost the entire volume of feeding duct 4, since the fuel can also flow within the inner volume of tubular body 2; in addition, it also improves the thermal exchange between the fuel and heating device 1, because it increases the hot area of heating device 1 that is lapped by the fuel, i.e. both the outer and the inner surfaces thereof, thereby optimizing the thermal exchange between the two. At least a portion of heating device 1 and/or of body 2 may have shapes other than the tubular one described above; for example, it may have a generally prismatic shape or even a flat shape, like a laminar body, or any shape that can be at least partly obtained through a moulding process. By moulding process it is meant herein any known or inventive process suitable for this application, e.g. injection of a material, like a metallic or thermoplastic or a different material, into a mould, or deformation and/or profiling and/or cutting of said material by means of a die, etc.

Body 2 may be made of a metal such as, by way of non-limiting example, steel, stainless steel, aluminium alloys, titanium alloys and the like, or alternative materials such as ceramic materials of a type suitable for use in chemically aggressive environments.

Electric heating element 3 obtained on body 2 through deposition and/or lithography techniques essentially consists of one or more tracks which are deposited onto body 2, so that the utmost flexibility is attained in the selection of the shape and density per surface unit thereof, thus improving the possibility of adjustment of the heat exchanged with the fuel.

Said tracks may be made of one and/or a plurality of materials, the latter being electrically different from one another, such as a material which is a good electric conductor, i.e. having a low electric resistance, and/or a material having a predefined electric resistance and/or a material having a variable temperature coefficient electric resistance, like a positive temperature coefficient (PTC) resistor; advantageously, a PTC resistor can automatically adjust its own heating temperature.

When electric current is supplied, the tracks become hot by Joule effect and transmit heat to the surrounding fuel flowing within the feeding duct, and partially also to body 2 with which they are associated; for an electric heating element 3 manufactured at least partly by using said PTC resistor technology, when a predefined temperature is reached the resistance of the track material will automatically increase, thereby limiting the electric current and automatically providing a temperature adjustment.

It follows that where tracks are laid the fuel will be heated more than where there are no tracks or where the tracks are wider apart.

The preferred technique for creating such tracks is the so-called "thick-film" technique, wherein tracks made of an electrically conductive material are deposited onto body 2 and behave like electric resistors.

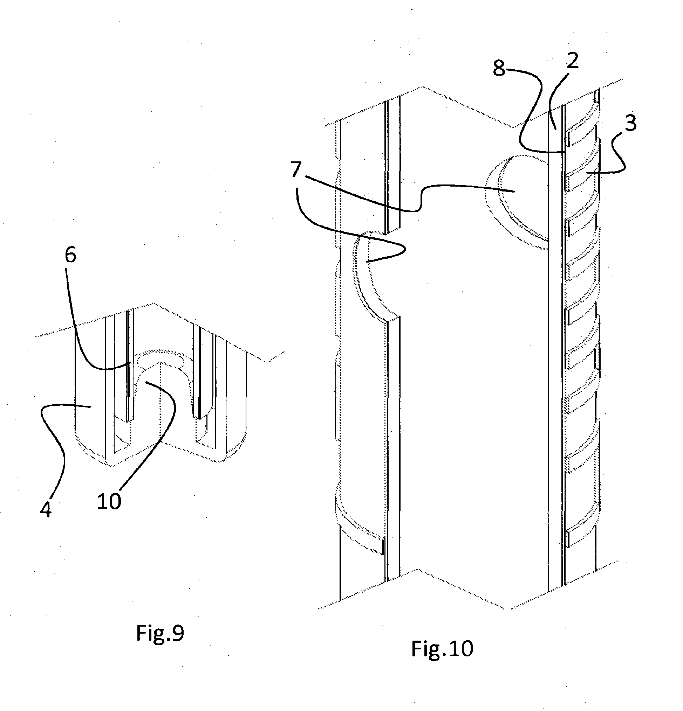

When also the surface of body 2 is made of an electrically conductive material, an electrically insulating layer will be provided at least in the area on which tracks are deposited, between the track and body 2; Fig. 10 clearly shows electric heating element 3 deposited on body 2 with the interposition of an electrically insulating layer 8, which in this case coats the entire outer surface of body 2. The electrically insulating material may be, for example, a thin coat of paint or oxide of the material of body 2, and preferably has good thermal conductivity for transferring heat to body 2.

If body 2 is made of a non-conductive material, said electrically insulating layer may be omitted.

Electric heating element 3 may also be coated with a thermally conductive protective layer in order to prevent it from being etched by the chemical agents contained in the fuel and/or to obtain better electric insulation, which layer should preferably be provided as a thin coat of paint and/or another deposited insulating material.

As shown in Figs. 5 and 6, electric heating element 3 provided in the form of tracks may advantageously be arranged on body 2 in different ways, e.g. there may be zones 3A where the track density per surface unit is relatively low (tracks widely spaced), zones 3B where the track density per surface unit is relatively high (tracks narrowly spaced) or even zones 3C where there are no tracks; the different arrangement and density of the tracks making up electric heating element 3 implies the possibility of obtaining variable heating, i.e. with zones 3B where the thermal exchange with the fuel is highest, zones 3A where the thermal exchange is at an intermediate level, and zones 3C with no heating tracks, where the fuel only receives heat from body 2.

By way of example, Fig. 4 and Fig. 6 illustrate a layout of the tracks on the surface of body 2 which ensures maximum fuel heating near outlets 42 and in the area of the annular chamber (formed between the outer surface of body 2 and the inner surface of feeding duct 4) facing outlets 42: in this way, the fuel that enters feeding duct 4 is brought to (and kept at) a certain temperature and is then heated to a higher temperature only near outlets 42, thus creating a variable heating scenario.

Fig. 8 illustrates in detail end portion 5 located at one end of heating device 1: end portion 5 acts as a sealing plug of open end 43 of feeding duct 4, while at the same time providing the electric connector that supplies power to electric heating element 3.

After heating device 1 has been inserted into duct 4, end portion 5 can be irremovably secured to the feeding duct 4: for this purpose, a part of end portion 5 may be welded to the mouth of feeding duct 4, preferably by laser welding, or by hot welding (e.g. through localized melting of the material of feeding duct 4 and of portion 5 in the coupling area), or by ultrasound welding, or as an alternative by glueing or other suitable fastening or welding techniques.

For laser welding, the materials of feeding duct 4 and of end portion 5 must be of a suitable type. For example, the thermoplastic material of feeding duct 4 is permeable to a laser beam, i.e. it can be crossed by a laser beam without overheating, while the material of end portion 5 is impermeable to a laser beam, i.e. it overheats when it is struck by the beam, thus creating a localized remelting zone in the thermoplastic material of end portion 5, which re-melts and is also welded to the adjacent material of feeding duct 4, these two materials being preferably of compatible types in view of said mutual welding; a welding process like this might be referred to the example of Fig. 8, wherein a radial laser beam would be applied to the end of feeding duct 4 that houses end portion 5, working from the outside to the inside.

By changing the shapes of the various details and the welding types or positions it is advantageously possible to reverse or change the characteristics of the materials; for example, the thermoplastic material of feeding duct 4 may be impermeable to a laser beam, i.e. it overheats and melts when struck by a laser beam, while the material of end portion 5 may be permeable to a laser beam, i.e. it does not overheat when struck by a laser beam.

According to a further variant, both the materials of feeding duct 4 and of end portion 5 will overheat and melt when they are struck by an axially directed laser beam, thus allowing to obtain a weld around the perimeter of the connection between duct 4 and end portion 5.

Said joining or welding methods, which may also be combined with one another, preferably also provide a hydraulic seal, i.e. they contribute to preventing fuel leaks.

For ultrasound or vibration welding, the materials must be of a suitable type, preferably the same material or materials having a compatible chemical nature, and the details must be shaped appropriately, in particular for the purpose of cooperating with a suitable welding tool or sonotrode. A version of the ultrasound and/or vibration welding process used for manufacturing the product according to the invention utilizes a tool shaped like at least a portion of the profile of at least one of the parts to be welded; said tool preferably compresses the welding area and causes the materials of the parts to vibrate, which are then melted and welded to each other. According to a variant of the welding process, the welding tool is moved along a path at least partly coinciding with the profile to be welded.

Still with reference to Fig.8, end portion 5 may alternatively be screwed onto feeding duct 4; for this purpose, both parts must be provided with suitable threads (not shown), and in this case it will be appropriate to employ a sealing gasket 51, e.g. an O-ring.

Alternative assembly methods may use, for example, connection pins or the like to join end portion 5 to feeding duct 4, preferably with the interposition of a sealing gasket 51.

As aforementioned, end portion 5 supplies power to electric heating element 3 by means of electric terminals 52 and 53, which are shown in the drawings as male connectors that cross body 55 of power supply connector 5, so that they can be accessed from the outside of feeding duct 4; of course, electric terminals 52 and 53 may alternatively be female connectors.

In the embodiment shown, electric terminals 52 and 53 are two, e.g. one positive terminal and one negative terminal, and are adapted to generate an electric potential difference, such as a direct voltage, across electric heating element 3: this is due to the fact that, for clarity, the illustrated embodiment only includes a single electric heating element 3 provided as a single, electrically continuous track; it should be noted, however, that the heater may comprise a plurality of electric heating elements 3 connected to respective electric terminals (not shown), possibly with one terminal in common: in such a case, electric heating elements 3 may be controlled either together or separately, thus providing the heater according to the present invention with remarkable versatility; in fact, a suitable electronic control unit may turn on only one electric heating element 3, only some of them, or all of them at once, e.g. depending on parameters such as fuel temperature, presence of unburnt exhaust gases, or exhaust gas temperature, so as to keep the combustion in the state that ensures the utmost efficiency at all times. To this end, a suitable control circuit is provided.

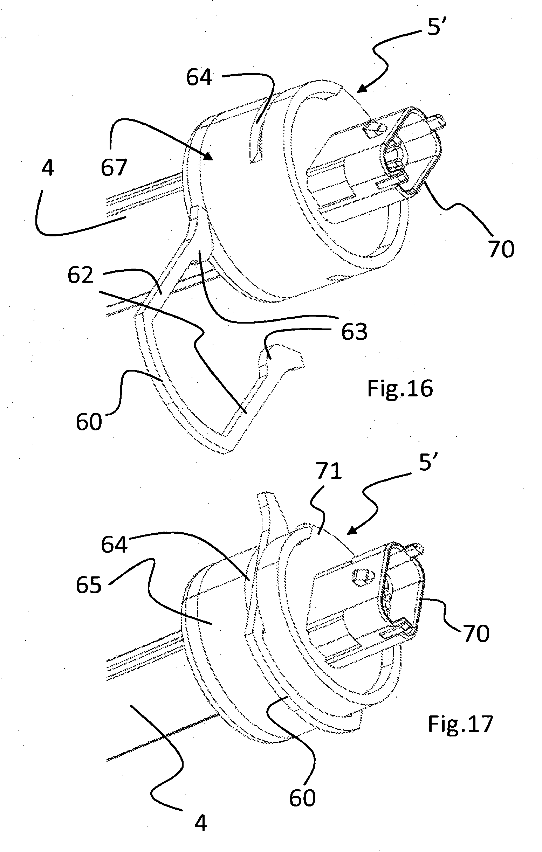

Advantageous alternative embodiments of the end portion and of the electric terminals are shown in Figs. 16 to 24, which will be described in detail hereafter. In one variant, said control circuit comprises or controls at least one temperature sensor, in particular one temperature sensor for each outlet 42 and/or inlet 41 of feeding duct 4.

Alternatively, said at least one temperature sensor may be a part of the heating device; for example, it may be mounted to body 2 or obtained directly through said deposition process, in an area close to the electric connector and/or to said outlets 42 and/or inlet 41.

In this case, for each electric heating element 3 and/or for each temperature sensor there may be at least one or two respective electric terminals (the ground terminal may, for example, be common).

In particular, electric heating element 3 may comprise a number of electric resistors provided in the form of a number of tracks matching the number of outlets and/or inlets of said feeding duct.

Advantageously, end portion 5 also performs an additional function, i.e. it is also used for centring body 2 within feeding duct 4, so as to create the aforesaid annular chamber; for this purpose, end portion 5 is integral or engaged with body 2 through a seat 54 provided centrally in body 55 of end portion 5, so that tubular body 2 is housed in a centred position along the axis of feeding duct 4; according to a preferred variant, said end portion 5 or electric connector is obtained by moulding or over-moulding a material, preferably an insulating thermoplastic material, directly onto body 2 and/or onto a portion of terminals 52, 53 and/or onto a portion of the electric tracks, preferably by holding a portion of heating device 1 in a predefined position or in a position centred in the mould during said moulding or over-moulding process.

At the opposite end of body 2 of heating device 1 there is a centring element 6, which is shown in greater detail in Fig. 9: in the illustrated embodiment, centring element 6 simply consists of an aperture or seat in tubular body 2 which engages into a centring projection or pin 10 integral with the body of feeding duct 4 and centred with respect to the axis thereof.

Centring element 6 may also be located in different positions or portions of heating element 1, or in other positions with respect to the inside of feeding duct 4; it may also be shaped differently from the example of Fig. 4; for example, said centring element 6 may be located in an intermediate position and may be so shaped as to hold in position at least a portion of heating device 1 without obstructing the fuel flow.

Centring element 6 may advantageously be provided in the form of radial septa or projections associated or associable with either feeding duct 4 or the heating device, or both, or interposed or interposable between the latter for centring them while leaving a free section for the fuel flow.

In an alternative embodiment, centring element 6 may be provided as an enlargement of heater body 2 (whether in one piece or not with the latter) jutting out towards the inner wall of the feeding duct, like a disc, so as to centre body 2 along the axis of feeding duct 4. In this case, if the disc is located in an intermediate position along body 2, the latter will be provided with one or more cutouts or holes for allowing the fuel to flow therethrough; if it is located at the end of the body, the cutouts or holes may however be omitted. In this regard, it should be mentioned that the dimensions, shapes and positions of the cutouts or holes in the disc may be such that the latter has the aspect of a series of radial ribs.

Centring element 6 and/or end portion 5 (through cavity 54) advantageously contribute to holding heating device 1 in position within feeding duct 4, thus creating and preserving the annular chamber between the two: as a matter of fact, it is apparent that in the absence of such measures the vibrations suffered by feeding duct 4 would tend to make heating device 1 move freely inside feeding duct 1, thereby compromising the correct fluid dynamics of the system.

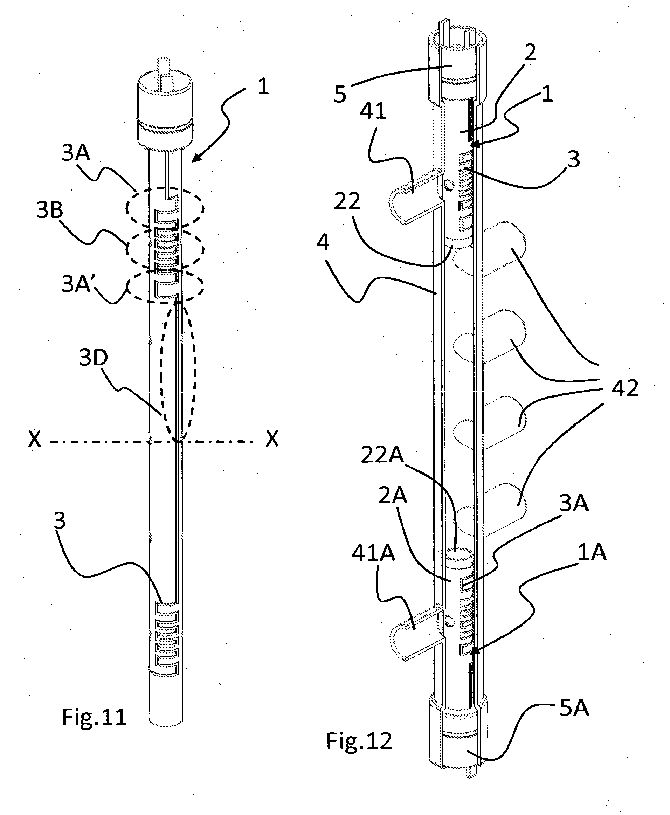

An alternative embodiment of electric heating element 3 is illustrated in Fig. 11, which shows a track arrangement that follows a symmetric path along the longitudinal extension of body 2, in particular comprising (starting from one end of body 2) a first zone 3A having a certain track density, a second zone 3B where the track density is higher than in first zone 3A, a third zone 3A' where the track density is essentially the same as that in first zone 3A, and a fourth zone 3D where the track density is minimal and lower than that in first zone 3A, but greater than zero; said zone 3D may also include a low-resistance track, i.e. of a type adapted to conduct electricity without getting hot. Said zones are repeated in a substantially symmetrical manner with respect to the axis of symmetry XX (indicated in the drawing by means of a dashed-dotted line) located substantially in the middle of body 2 (not taking into account the connection portion at the two opposite ends, to which symmetry of course does not apply).

This particular configuration allows to obtain a particularly advantageous fuel heating device in the presence of a limited fuel flow that can be heated according to the known principles of thermodynamics, in particular through propagation of heat from two end heating elements 1, 1A to the fuel contained in entire feeding duct 4.

The heating element is provided across its whole length with a series of holes adapted to put the fluid contained within the heating element in communication with the outside fluid. As known, the fluid in contact with the heating element warms up in less time and changes its density with temperature much more quickly than the fluid farther away from the heating element. This density change causes a whirling or swirling motion in the fluid. The passage holes allow all the fluid to be mixed in a chaotic manner both inside and outside the heating element, thus ensuring a uniform heating of all the fluid.

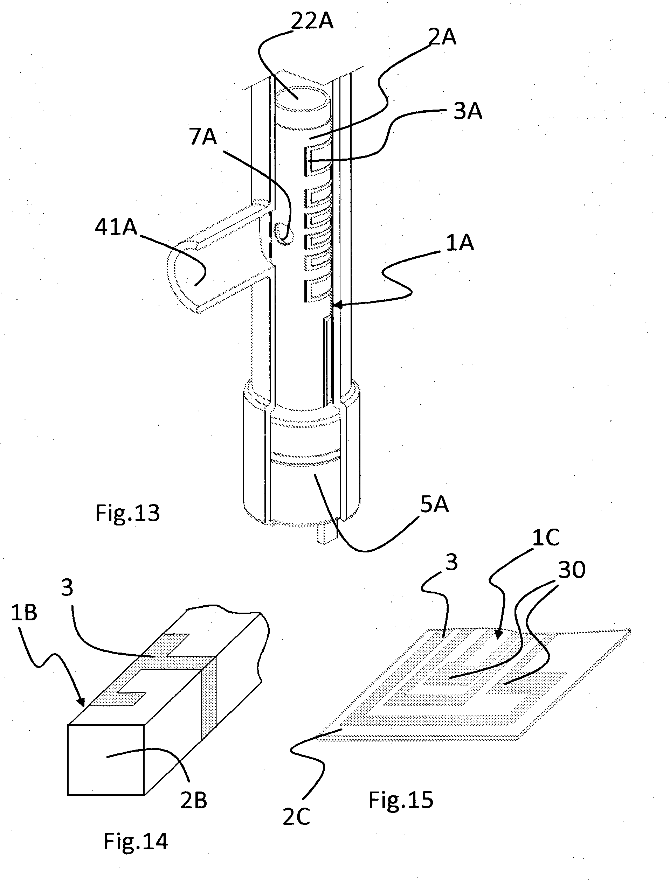

According to a further variant shown in Fig. 12, and in more detail in Fig. 13, two distinct heating devices 1, 1A according to the present invention can be installed in one feeding duct 4.

Said Fig. 12 and Fig. 13 also show an additional variant of the feeding duct, which has two distinct ducts 41 and 41A, both of which are afferent to feeding duct 4: both of two ducts 41 and 41A may be fuel inlets, or alternatively one may be a fuel inlet and the other a fuel recirculation duct.

Such a variant of the feeding duct may or may not be associated with said variant comprising two heating devices 1 and 1A.

In this case as well, both heating devices 1 and 1A are constructed as described above, but they extend only partially within feeding duct 4 in a manner such that they do not occupy the area thereof that abuts on outlet ducts 42.

In compliance with the above description, each heating device 1 and 1A is fitted with an end portion 5 and 5A, but lacks the centring element, which can be omitted because in this variant the heating devices have a limited longitudinal extension, and therefore can be held in position by a single point of constraint, i.e. respective end portion 5 and 5A.

Of course, depending on specific installation requirements, a variant may also be conceived wherein respective centring elements are provided for each heating device 1 and 1A, e.g. one or more radial projections interposed between heaters 1,1A or body 2,2A and feeding duct 4, or supports (e.g. "L" shaped supports) jutting out from the inner walls of the feeding duct and fitted with respective axial projections (or pegs) that engage into end aperture 22, 22A of heating devices 1,1A: in substance, these projections are equivalent to element 6, but they are provided at an intermediate portion of the duct, instead of at the ends thereof, thus being only supported by one or more ribs to allow the fuel to flow through.

As shown also in the detail of Fig. 13, in fact, bodies 2 and 2A are tubular bodies having respective apertures 22 and 22A facing the portion of duct 4 that abuts on outlet ducts 42, so that the fuel flow is not hindered. Each of them preferably has a respective hole 7 and 7A abutting on the nearby duct 41 and 41A, respectively, which hole also performs the function of improving the fluid dynamics of the system by allowing the passage of the fluid in tubular body 2 from/to (depending on the function) ducts 41 or 41 A.

It should be underlined that the shape of body 2, which is shown herein as being tubular, is not limiting for the invention, in that the body may in general have any other shape, e.g. it may be a prismatic solid or a simple plate, as shown indicatively in Fig. 14 and Fig. 15, which show by way of example two alternative embodiments of the heating device.

Fig. 14 illustrates a heating device 1B comprising a prismatic body 2B (in particular a body having a solid square cross-section), on whose surface electric heating element 3 is laid in the form of tracks; in order to improve the electric continuity among the tracks laid on the various surfaces, the corners of the solid or prism may advantageously be rounded.

Fig. 15 illustrates a heating device 1C comprising a plate-shaped body 2C on which the tracks that make up heating element 3 are laid. In this regard, it should be pointed out that a plate-shaped body 2C offers a large number of advantages, since the tracks of heating element 3 can be laid thereon by using the machinery commonly in use for the production of electronic or printed circuits.

It is apparent from Fig. 15 that the tracks that make up heating element 3 may have whatever layout is considered to be appropriate for heating the fuel as desired in accordance with the above description, and may additionally include enlargements 30, which are "patches" capable of transferring more heat to the fuel, in particular when the heater is of the previously described PTC type.

Though it has been illustrated herein with reference to plate-shaped body 2C, this solution (i.e. presence of patches 30) may also be implemented in the previously described case of a tubular body 2 or a prismatic body 2B.

A further alternative falling within the scope of the teachings of the present invention is shown in Fig. 25, wherein electric heating element 3 is provided in the form of a simple coil-like winding deposited onto the hollow or cylindrical tubular body 2: in this case, the advantage obtained relates to ease of implementation.

In this case, as can be seen in the example shown in Fig.25, the coil may have different winding pitches, so as to create zones where the fluid flowing in the feeding duct is heated differently, as previously explained.

The present invention may be further improved by providing the heating device with an electric protection device adapted to protect it against overheating and to implement a fireproof function.

By way of non-limiting example, an electric protection device may be provided through a thermal fuse connected in series to the heater for breaking the electric connection in the event of a fault, thus switching it off; in this case, the protection device is of the "non-resettable" type, i.e. once the connection has been broken following the occurrence of a fault, it can only be restored by replacing the fuse.

As an alternative providing the same function, a "resettable" protection device may be used such as, for example, a thermal contact (e.g. a bimetal contact, which when overheating occurs opens the circuit in which it has been installed), which breaks the power supply to the series-connected heater; a good alternative to this kind of resettable protection devices may be a PTC current limiter, which reduces the current supplied to the series-connected heater when overheating beyond a predefined threshold occurs.

Referring to Figs. 16 to 21, there is shown an alternative embodiment of end portion 5' connected to heater body 4' through a snap-type coupling, i.e. a quick coupling.

In the illustrated example, the snap-type coupling comprises a "U" cotter pin 60 having two opposed arms 62 preferably ending with retaining elements 63, in particular two teeth or projections 63.

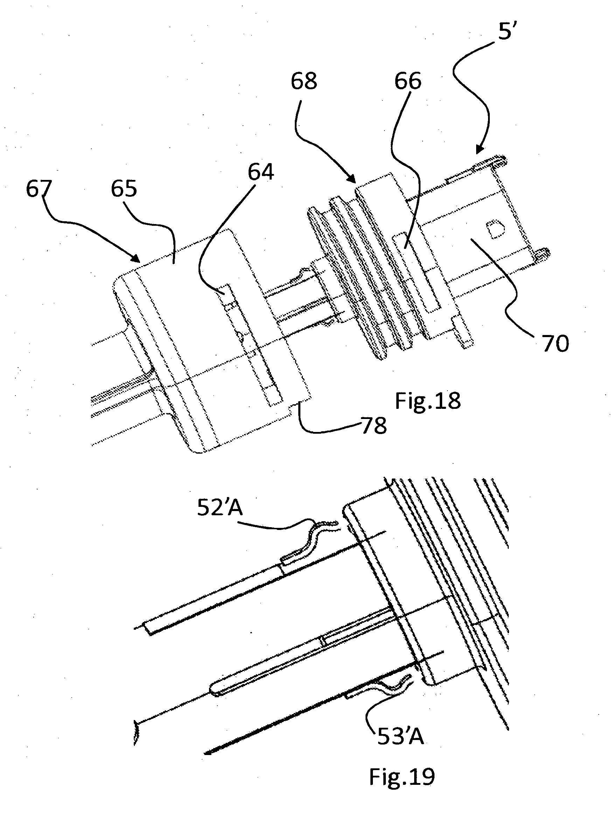

As shown in Figs. 17 and 18, arms 62 engage through two apertures or windows 64 in the body of feeding duct 4 into two underlying matching engagement seats or grooves 66 provided on end portion 5': windows 64 are arranged on skirt or surface 65 of outer coupling part 67 of the body of feeding duct 4, which outer coupling part 67 has a substantially tubular shape and has a bigger diameter in order to receive inner coupling part 68 of end portion 5', which carries housing 70 for the electric terminals forming as a whole the electric connector, preferably of a type already or commonly in use in the automotive industry; inner coupling part 68 and housing 70 are preferably manufactured in one piece, so as to limit the number of parts and simplify the assembly stages.

Cotter pin 60 cannot be removed accidentally thanks to retaining teeth 63, which can only be disengaged by applying a great force onto cotter pin 60 in order to cause an elastic deformation of arms 62, thus disengaging retaining teeth 63; this provides a quick coupling featuring a safety function, which can be opened, if necessary, for maintaining or replacing heater 2.

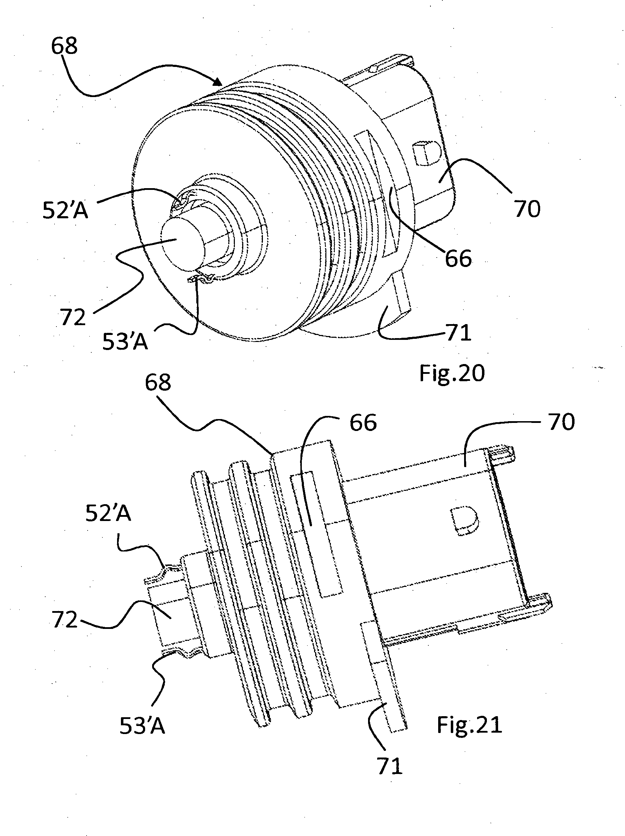

Inner coupling part 68 and housing 70 thereof are more clearly visible in Figs. 20 and 21, which also show striker tab 71 provided on inner coupling part 68 at the end thereof that abuts on housing 70; the striker tab is located in the area opposite to the one that faces cotter pin 60, and abuts against the edge of outer coupling part 67, thus facilitating the alignment of slots 64 with underlying engagement grooves 66 during the assembly process, which is advantageously much simplified.

For this purpose, in fact, striker tab 71 couples with matching seat 78, visible in Fig. 18, of outer coupling part 67 associated with the body of feeding duct 4, thus also providing a centring and/or antirotation function between feeding duct 4 and the heater, hence preventing them from being assembled incorrectly.

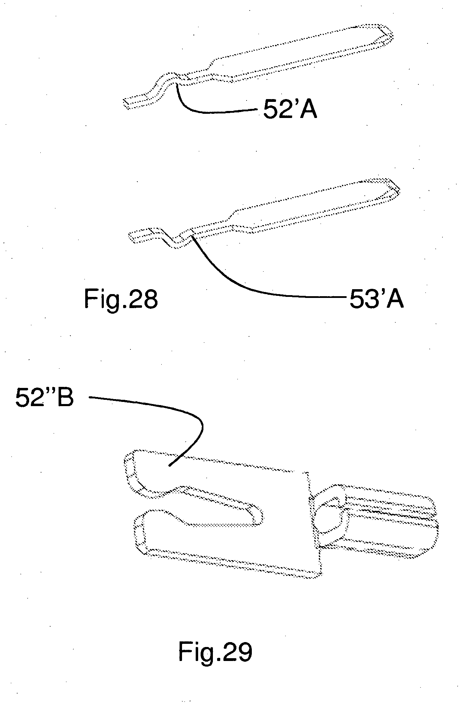

Figs. 20 and 21 and the detail of Figs. 19 and 28 show a particularly advantageous embodiment of the electric terminals, which feature contact ends 52'A and 53'A that improve the quality of the electric contact between the electric heating elements and the electric terminals that supply power thereto.

Said contact ends may advantageously be of various types; for example, they may be welded to the heating tracks or simply placed in contact with the latter by compression.

When contact ends 52'A and 53'A are of the compression type, hollow body 4 is engaged onto centring profile 72 and compression-type contact ends 52'A and 53'A come in contact with electric heating elements 3, 30, thus supplying power thereto; for this purpose, compression-type contact ends 52'A and 53'A are elastically deformable and include an arch which is concave towards the centring profile so that, when hollow body 4 has been mounted on centring profile 72, the elastic rebound of said contact ends (improved by the arched shape of the final portion thereof, shown in detail in Fig. 28) causes them to exert a certain compression force onto electric heating element 3,30, thereby improving the quality of the electric contact (i.e. reducing the electric resistance of the coupling).

When contact ends 52'A and 53'A are welded to the tracks, their arched profile, which is shown in detail also in Fig. 28, advantageously allows them to compensate for any assembly or production tolerances, e.g. by deforming slightly to fit slightly variable heater diameters or dimensions or to make up for an imperfect positioning.

Another interesting result achieved by using compression-type contact ends 52'A and 53'A is that they also ensure that body 2 is locked in position onto centring profile 72 without requiring additional locking or fastening means, thus further reducing the number of parts and hence the production costs: in fact, compression-type contact ends 52'A and 53'A secure hollow body 2 to centring profile 72 by pressing the former against the latter.

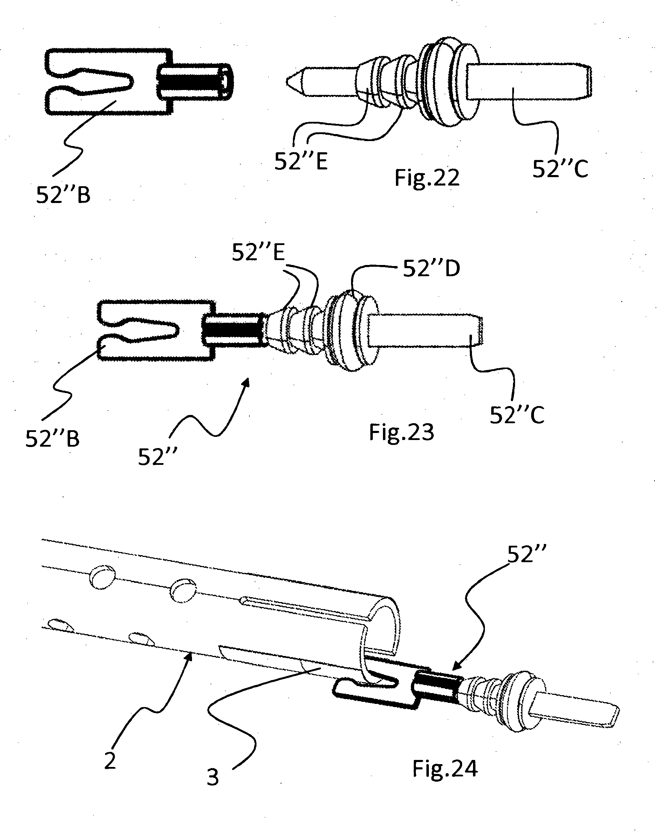

Figs. 22, 23 and 24 illustrate an alternative embodiment of a compression-type contact end 52"B, whose end portion coupled to the body is shown in greater detail in Fig. 29.

In this case, electric terminal 52" shown in the drawings is a sectional one, and comprises a contact end 52"B, preferably of the compression type and/or of the type fitted with at least partly elastic means for providing the electric connection.

Sectional electric terminal 52" shown in the drawings comprises at least two parts, i.e. a contact end 52"B, shown in detail in Fig. 29, and an opposite power supply end 52"C, which parts are in the illustrated example engaged with each other to form terminal 52", as shown in Figs. 22 and 23.

Contact end 52"B has in this case a bifurcated shape that, as shown in Fig. 24, clamps elastically the thickness side of body 4, thus closing the electric circuit with electric heater 3, or more specifically with the contact enlargements or patches 30, as shown.

In this case as well, a further possible advantage can be obtained from the fact that a suitable shape of the electric terminals, such as a bifurcated shape, can also at the same time ensure or improve the locking of body 2 in position 2 without requiring any additional locking or fastening means, thereby reducing the production costs, and without requiring the use of centring profile 72.

Terminals 52" may be plugged into an inner part 68 of end portion 5, or into a one-piece end portion 5 (as previously described), which for this purpose has suitable seats for housing and securing (e.g. through a joint or by interference fit) insulating crown 52"D, which in a simpler embodiment may consist of a simple O-ring, i.e. a circular-section annular rubber gasket. As an alternative or in addition to said gaskets, a seal obtained through sealing agents or resins may also advantageously be provided.

It can also be seen that there are tapered annular projections 52"E which engage into matching seats on inner part 68 or end portion 5 (not shown).

In this case, the assembly process can be advantageously simplified, for example, by first securing compression-type contact end 52"B to body 2 and power supply end 52"C into the seat of inner part 68 or end portion 5, and then engaging compression-type contact end 52"B onto power supply end 52"C for ensuring electric continuity between these two parts.

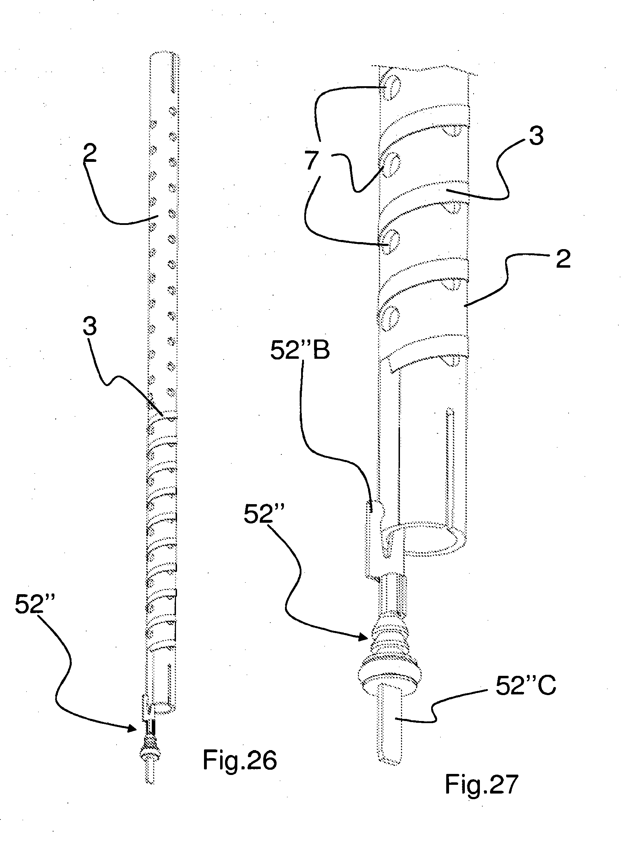

Figs. 26 and 27 are general views of such a variant mounted to body 2; in particular, it should be noted that, if body 2 is a metallic one, in order to prevent any short circuits between the heating track contact area and the inner part of the body, it is conceivable to insert a ring made of insulating material into the body in a manner such that the ring is interposed between the contact end of bifurcated terminal 52"B and the inner surface of the body, thus preventing any short circuits. Said insulating element may be fitted to one bifurcated terminal only, so that one of the two ends of the heating coil can be connected to ground.

A further variant may also be conceived wherein the holes are replaced by a single aperture, e.g. having a linear or coil-like shape along the longitudinal extension of the body of the heating device, which puts the inner area of the body in communication with the outer area of the same; such a solution allows for a simple and low-cost production of said body, e.g. by rolling a metal foil as a half circle or winding it as a coil, and leaving two ends or sides of the support foil apart from each other by a preferred distance.

## Claims

1. Heating dcvice (1, 1A, 1B, 1C) in combination with a fuel feeding duct (4), wherein said fuel feeding duct (4) comprises
at least one inlet (41) and at least one outlet (42) which can be associated with an injector and/or a branching duct, said device (1, 1A, 1B, 1C) being of the type that comprises at least one body (2, 2A, 2B, 2C) and at least one electric heating element (3, 30) associated with said body (2, 2A, 2B, 2C), said device being provided in the form of a component adapted to be at least partly arranged into said fuel feeding duct (4) in a manner such that it extends along the whole length of the fuel feeding duct (4), **characterized in that** said electric heating element (3, 30) is obtained at least partly by using one or more of the following techniques on said body (2A, 2B, 2C): deposition, lithography, serigraphy,
and **in that**
said body (2, 2A, 2B, 2C) is at least partly hollow internally, and has at least one aperture or hole (7, 7A).

2. Device according to claim 1, wherein said electric heating element (3,30) is obtained at least partly by using the "thick-film" deposition technique.

3. Device (1,1A,1B,1C) according to claim 1 or 2, wherein the whole electric heating element (3,30) or a portion thereof is obtained through deposition and/or lithography and/or serigraphy techniques and/or through the "thick-film" deposition technique, and is distributed evenly or unevenly across the length of said device.

4. Device according to claim 3, wherein said portion includes zones (3A,3B,30) adapted to provide a different, in particular higher, heat output, preferably near the outlets (42) and/or the inlets (41) of said feeding duct (4).

5. Device according to one or more of the preceding claims, wherein said electric heating element (3,30) comprises a plurality of electric heating elements (3,30), in particular electric resistors, and/or zones (3A,3B,30), preferably in a number proportional or equal to the number of outlets (42) and/or inlets (41) of said feeding duct (4).

6. Device according to one or more of the preceding claims, wherein at least a portion of the device according to the invention or said body (2,2A,2B,2C) is made of metal, preferably steel, stainless steel, aluminium or alloys thereof, titanium alloys, or alternatively said body (2,2A,2B,2C) is made of synthetic materials, such as a plastic or ceramic material, or other mouldable materials.

7. Device according to one or more of the preceding claims, wherein on the surface of said body (2), at least in the area where said heating elements are provided, an electrically insulating material or layer is interposed between the track and the body (2), said electrically insulating material preferably consisting of a layer of deposited material, as a paint, and/or a layer of oxide of the material of the body (2).

8. Device according to one or more of the preceding claims, wherein said electric heating element (3) is coated with a protective layer or material, preferably thermally conductive, provided in a form and/or of a type suitable for preventing or resisting etching by the chemical agents contained in the fuel.

9. Device according to one or more of the preceding claims, wherein the device or said body (2,2A,2B,2C) has one end fitted with an end portion (5,5A,5') for securing, preferably in a centred position, said body (2,2A,2B,2C) to said feeding duct (4) and/or for supplying electric power to said electric heating element (3,30).

10. Device according to one or more of the preceding claims, wherein the device or said body (2,2A,2B,2C) includes at least one supporting or fastening or centring element (6), preferably associated or associable with at least one of said body (2,2A,2B,2C) and said feeding duct (4).

11. Device according to one or more of the preceding claims, comprising two or more electric heating elements (3,30).

12. Device according to one or more of the preceding claims, comprising automatic adjustment means and/or an electric or electronic control circuit integrated into or connected to at least one electric heating element (3,30) and/or comprising at least one electric protection device and/or at least one temperature sensor, in particular one temperature sensor for each outlet (42) and/or inlet (41) of said feeding duct (4).

13. Heating device (1,1A,1B,1C) in combination with a fuel feeding duct (4) according to one or more of the preceding claims, comprising supporting and/or centring means (5,6,10,54,72) and/or fastening means (60,64, 65) for said heating device

14. Combustion engine comprising at least one device according to one or more of claims 1 to 13.

## Patentansprüche

1. Heizvorrichtung (1, 1A, 1B, 1C) in Kombination mit einem Brennstoffzuführkanal (4), wobei der Brennstoffzuführkanal (4) wenigstens einen Einlass (41) und wenigstens einen Auslass (42) umfasst, die mit einem Einspritzer und/oder einem Verzweigungskanal verbunden sein können, wobei die Vorrichtung (1, 1A, 1B, 1C) derart ausgeführt ist, dass sie wenigstens einen Körper (2, 2A, 2B, 2C) und wenigstens ein elektrisches Heizelement (3, 30) umfasst, das mit dem Körper (2, 2A, 2B, 2C) verbunden ist, wobei die Vorrichtung in der Form einer Komponente bereitgestellt ist, die ausgebildet ist, um wenigstens teilweise in dem Brennstoffzuführkanal (4) angeordnet zu sein, dergestalt, dass sie sich entlang der gesamten Länge des Brennstoffzuführkanals (4) erstreckt,
**dadurch gekennzeichnet, dass**
das elektrische Heizelement (3, 30) wenigstens teilweise durch Verwenden einer oder mehrerer der folgenden Techniken auf dem Körper (2A, 2B, 2C) erhalten wird: Deposition, Lithographie, Serigraphie, und
dass der Körper (2, 2A, 2B, 2C) im Inneren wenigstens teilweise hohl ausgebildet ist, und wenigstens eine Öffnung oder ein Loch (7, 7A) aufweist.

2. Vorrichtung nach Anspruch 1, wobei das elektrische Heizelement (3, 30) wenigstens teilweise durch Verwenden der "Dickschicht"-Depositionstechnik erzielt wird.

3. Vorrichtung (1, 1A, 1 B, 1C) nach Anspruch 1 oder 2, wobei das gesamte elektrische Heizelement (3, 30) oder ein Abschnitt davon durch Depositions- und/oder Lithographie- und/oder Serigraphie-Techniken und/oder durch die "Dickschicht"-Depositionstechnik erhalten wird, und gleichmäßig oder ungleichmäßig über die Länge der Vorrichtung verteilt ist.

4. Vorrichtung nach Anspruch 3, wobei der Abschnitt Zonen (3A, 3B, 30) enthält, die ausgebildet sind, eine unterschiedliche, insbesondere höhere, Hitzeausgabe bereitzustellen, vorzugsweise in der Nähe der Auslässe (42) und/oder Einlässe (41) des Zuführkanals (4).

5. Vorrichtung nach einem oder mehreren der vorhergehenden Ansprüche, wobei das elektrische Heizelement (3, 30) eine Mehrzahl von elektrischen Heizelementen (3, 30), insbesondere elektrischen Widerständen, und/oder Zonen (3A, 3B, 30) umfasst, vorzugsweise in einer Anzahl, die proportional zu oder gleich der Anzahl der Auslässe (42) und/oder Einlässe (41) des Zuführkanals (4) ist.

6. Vorrichtung nach einem oder mehreren der vorhergehenden Ansprüche, wobei wenigstens ein Abschnitt der erfindungsgemäßen Vorrichtung oder des Körpers (2, 2A, 2B, 2C) aus Metall, vorzugsweise Stahl, rostfreier Stahl, Aluminium oder Legierungen daraus, Titanlegierungen, hergestellt ist, oder alternativ der Körper (2, 2A, 2B, 2C) aus synthetischen Materialien, wie einem Kunststoff oder Keramikmaterial, oder anderen formbaren Materialien, hergestellt ist.

7. Vorrichtung nach einem oder mehreren der vorhergehenden Ansprüche, wobei auf der Oberfläche des Körpers (2), wenigstens in dem Bereich, in dem die Heizelemente bereitgestellt werden, ein elektrisch isolierendes Material oder Schicht zwischen der Spur und dem Körper (2) eingefügt ist, wobei das elektrisch isolierende Material vorzugsweise aus einer Schicht aus aufgebrachtem Material, wie einer Farbe, und/oder einer Schicht eines Oxids des Materials des Körpers (2) besteht.

8. Vorrichtung nach einem oder mehreren der vorhergehenden Ansprüche, wobei das elektrische Heizelement (3) mit einer schützenden Schicht oder Material, welches vorzugsweise thermisch leitend ist, beschichtet ist, die in einer Form und/oder von einem Art bereitgestellt ist, die geeignet ist, einer Ätzung durch die chemischen Wirkstoffe, die im Brennstoff enthalten sind, vorzubeugen oder zu widestehen.

9. Vorrichtung nach einem oder mehreren der vorhergehenden Ansprüche, wobei die Vorrichtung oder der Körper (2, 2A, 2B, 2C) ein Ende aufweist, an dem ein Endabschnitt (5, 5A, 5') angebracht ist, um den Körper (2, 2A, 2B, 2C), vorzugsweise in einer zentrierten Position, am Zuführkanal (4) zu befestigen und/oder um das elektrische Heizelement (3, 30) mit elektrischer Energie zu versorgen.

10. Vorrichtung nach einem oder mehreren der vorhergehenden Ansprüche, wobei die Vorrichtung oder der Körper (2, 2A, 2B, 2C) wenigstens ein Stütz- oder Befestigungs- oder Zentrierelement (6) enthält, das vorzugsweise mit wenigstens einem des Körpers (2, 2A, 2B, 2C) und des Zuführkanals (4) verbunden oder verbindbar ist.

11. Vorrichtung nach einem oder mehreren der vorhergehenden Ansprüche, zwei oder mehr elektrische Heizelemente (3, 30) umfassend.

12. Vorrichtung nach einem oder mehreren der vorhergehenden Ansprüche, automatische Anpassungsmittel und/oder einen elektrischen oder elektronischen Steuerschaltkreis umfassend, der in wenigstens ein elektrisches Heizelement (3, 30) integriert oder damit verbunden ist, und/oder wenigstens eine elektrische Schutzvorrichtung und/oder wenigstens einen Temperatursensor, insbesondere einen Temperatursensor für jeden Auslass (42) und/oder Einlass (41) des Zuführkanals (4), umfassend.

13. Heizvorrichtung (1, 1A, 1B, 1C) in Kombination mit einem Brennstoffzuführkanal (4) nach einem oder mehreren der vorhergehenden Ansprüche, umfassend Stütz- und/oder Zentriermittel (5, 6, 10, 54, 72) und/oder Befestigungsmittel (60, 64, 65) für die Heizvorrichtung.

14. Verbrennungsmotor, umfassend wenigstens eine Vorrichtung nach einem oder mehreren der Ansprüche 1 bis 13.

## Revendications

1. Dispositif de chauffage (1, 1A, 1B, 1C) en combinaison avec un conduit d'alimentation en carburant (4), dans lequel ledit conduit d'alimentation en carburant (4) comprend :
- au moins une entrée (41) et au moins une sortie (42) qui peuvent être associées à un injecteur et/ou un conduit de dérivation, ledit dispositif (1, 1A, 1 B, 1 C) étant du type qui comprend au moins un corps (2, 2A, 2B, 2C) et au moins un élément de chauffage électrique (3, 30) associé au dit corps (2, 2A, 2B, 2C), ledit dispositif étant fourni sous la forme d'un composant conçu pour être au moins en partie agencé dans ledit conduit d'alimentation en carburant (4) d'une manière telle qu'il s'étend sur toute la longueur du conduit d'alimentation en carburant (4) **caractérisé en ce que** ledit élément de chauffage électrique (3, 30) est obtenu au moins en partie grâce à une ou plusieurs des techniques suivantes sur ledit corps (2A, 2B, 2C) : dépôt, lithographie, sérigraphie, et **en ce que** ledit corps (2, 2A, 2B, 2C) est au moins en partie creux, à l'intérieur, et est muni d'au moins une ouverture ou d'un orifice (7, 7A).

2. Dispositif selon la revendication 1, dans lequel ledit élément de chauffage électrique (3, 30) est obtenu au moins en partie grâce à la technique de dépôt en « film épais ».

3. Dispositif (1, 1A, 1B, 1C) selon la revendication 1 ou 2, dans lequel l'intégralité de l'élément de chauffage électrique (3, 30) ou une portion de celui-ci est obtenu(e) grâce aux techniques de dépôt et/ou de lithographie et/ou de sérigraphie et/ou grâce à la technique de dépôt en « film épais » et est réparti(e) de manière uniforme ou non uniforme sur toute la longueur dudit dispositif.

4. Dispositif selon la revendication 3, dans lequel ladite portion inclut des zones (3A, 3B, 30) conçues pour fournir une sortie de chaleur différente, en particulier plus élevée, de préférence à proximité des sorties (42) et/ou des entrées (41) dudit conduit d'alimentation en carburant (4).

5. Dispositif selon une ou plusieurs des revendications précédentes, dans lequel ledit élément chauffant électrique (3, 30) comprend une pluralité d'éléments de chauffage électriques (3, 30), en particulier des résistances électriques, et/ou des zones (3A, 3B, 30), de préférence dans un nombre proportionnel ou égal au nombre des sorties (42) et/ou des entrées (41) dudit conduit d'alimentation en carburant (4).

6. Dispositif selon une ou plusieurs des revendications précédentes, dans lequel au moins une portion du dispositif selon l'invention ou ledit corps (2, 2A, 2B, 2C) est composé de métal, de préférence d'acier, d'acier inoxydable, d'aluminium ou des alliages de ceux-ci, des alliages de titane, ou selon une autre solution ledit corps (2, 2A, 2B, 2C) est constitué de matériaux synthétiques, tels qu'une matière plastique ou une céramique, ou tout autre matériau pouvant être moulé.

7. Dispositif selon une ou plusieurs des revendications précédentes, dans lequel sur la surface dudit corps (2), au moins dans la zone dans laquelle lesdits éléments de chauffage sont fournis, un matériau ou une couche d'isolant électrique est intercalé(e) entre ledit passage et le corps (2), ledit matériau isolant électrique consistant, de préférence, en une couche de matériau déposé, tel que de la peinture, et/ou une couche d'oxyde du matériau du corps (2).

8. Dispositif selon une ou plusieurs des revendications précédentes, dans lequel ledit élément de chauffage électrique (3) est revêtu d'une couche ou d'un matériau de protection, de préférence thermoconductrice/thermoconducteur, fourni(e) sous une forme et/ou dans un type adapté(e) pour empêcher ou résister à une attaque par les agents chimiques contenus dans le carburant.

9. Dispositif selon une ou plusieurs des revendications précédentes, dans lequel le dispositif ou ledit corps (2, 2A, 2B, 2C) a une extrémité munie d'une portion d'extrémité (5, 5A, 5') permettant de sécuriser, de préférence en position centrée, ledit corps (2, 2A, 2B, 2C) par rapport au dit conduit d'alimentation (4) et/ou d'alimenter ledit élément de chauffage électrique (3, 30) en courant électrique.

10. Dispositif selon une ou plusieurs des revendications précédentes, dans lequel le dispositif ou ledit corps (2, 2A, 2B, 2C) inclut au moins un élément de support ou de fixation ou de centrage (6), de préférence associé ou pouvant être associé à au moins l'un dudit corps (2, 2A, 2B, 2C) et dudit conduit d'alimentation en carburant (4).

11. Dispositif selon une ou plusieurs des revendications précédentes, comprenant deux ou plusieurs éléments de chauffage électriques (3, 30).

12. Dispositif selon une ou plusieurs des revendications précédentes, comprenant des moyens de réglage automatique et/ou un circuit de commande électrique ou électronique intégré dans ou raccordé à au moins un élément de chauffage électrique (3, 30) et/ou comprenant au moins un dispositif de protection électrique et/ou au moins une sonde de température, en particulier une sonde de température pour chaque sortie (42) et/ou entrée (41) dudit conduit d'alimentation en carburant (4).

13. Dispositif de chauffage (1, 1A, 1B, 1C) en combinaison avec un conduit d'alimentation en carburant (4) selon une ou plusieurs des revendications précédentes, comprenant des moyens de support et/ou de centrage (5, 6, 10, 54, 72) et/ou des moyens de fixation (60, 64, 65) dudit dispositif de chauffage.

14. Moteur à combustion comprenant au moins un dispositif selon une ou plusieurs des revendications 1 à 13.
